# EUROPEAN PATENT APPLICATION

(11) **EP 2 295 836 A1**
(43) Date of publication of application: **16.03.2011**
(21) Application number: 10171142.2
(22) Date of filing: 28.07.2010
(51) Int. Cl.: F16K 1/226, F02D 9/10

(54) **Butterfly valve, preferably for a blow off circuit of a gas turbine plant**

(30) Priority: 29.07.2009 IT MI20091345
(71) Applicant: Ansaldo Energia S.p.A., Genova (IT)
(72) Inventor: Dotta, Claudio, 17044, S. MARTINO STELLA (IT); Ferrari, Fabrizio, 16013, CAMPO LIGURE (IT); Massalin, Luciano, 16143, GENOVA (IT)
(74) Representative: Jorio, Paolo

(57) **Abstract**

A butterfly valve (12), preferably for a blow off circuit (9) of a gas turbine plant (1), is provided with:
a supporting ring (18), which is provided with an inner perimeter edge (25) defining a fluid flow section (27), and with an annular seat (29) arranged along the inner perimeter edge (25);
a disc (23), which is pivoted to the supporting ring (18) and is mobile between a valve closing position (12), wherein the disc (23) obstructs the fluid flow section (27), and a valve opening position (12), wherein the disc (23) does not obstruct the fluid passage section (27) allowing the flowing of the fluid;
a sealing ring (22) partially housed in the annular seat (29) and adapted to abut against a peripheral edge (44) of the disc (23) when the disc (23) is in the valve closing position (12); the sealing ring (22) comprising an inner annular portion (34), which is contained in the annular seat (29), and a projecting annular portion (35), which projects radially from the annular seat (29) and is hollow.

## Description

The present invention relates to a butterfly valve, preferably for a blow off circuit of a gas turbine plant.

Gas turbine plants comprise a compressor, a combustion chamber, a gas turbine and a blow off circuit, which connects the compressor to the gas turbine. In particular, the blow off circuit comprises several extraction lines for extracting air from the compressor and discharging it at the discharge of the gas turbine to avoid a stalling condition of the compressor, commonly named "pumping".

Pumping is a very dangerous condition for compressors because it determines the onset of vibrations and overheating of the components, which can seriously damage the plant.

A butterfly valve, commonly named "blow off valve", is adapted to cut off the air flow between the compressor and the turbine exhaust arranged along each extraction line.

In normal operating conditions with the turbine running, the butterfly valves are closed and must guarantee a practically perfect sealing to allow air to flow exclusively into the compressor without penalizing efficiency.

In particular operating conditions, however, the butterfly valves must open very rapidly to allow the extraction of air from the compressor and to prevent the pumping condition of the compressor.

Butterfly valves of known type comprise a supporting ring, which defines a fluid flow section, a sealing ring and a disc, which is mobile between a valve closing position, in which the disc obstructs the flow section and a valve opening position, in which the disc does not obstruct the flow section allowing the flow of fluid.

Butterfly valves of this type, however, have shown malfunctions during operation along the extraction lines due to the onset of bonding phenomena between the sealing ring and the disc, commonly indicated with the term "jamming". The jamming between the sealing ring and the disc compromises the opening of the valve in critical moments in which air must be immediately extracted from the compressor to prevent pumping.

It is an object of the present invention to make a butterfly valve which is free from the drawbacks of the prior art illustrated above; in particular, it is the object of the present invention to make a reliable, efficient butterfly valve, which is reliable and efficient and, at the same time easy, cost-effective to make.

In accordance with these objects, the present invention relates to a butterfly valve, preferably for a blow off circuit of a gas turbine plant, comprising:
- a supporting ring, which is provided with an inner perimeter edge defining a fluid flow section, and with an annular seat arranged along the inner perimeter edge;
- a disc, which is pivoted to the supporting ring and is mobile between a valve closing position, wherein the disc obstructs the fluid flow section, and a valve opening position, wherein the disc does not obstruct the fluid passage section allowing the flowing of the fluid;
- a sealing ring partially housed in the annular seat and adapted to abut against a peripheral edge of the disc when the disc is in the valve closing position; the sealing ring comprising an inner annular portion, which is contained in the annular seat, and a projecting annular portion, which projects radially from the annular seat;
   the valve being **characterized in that** the projecting annular portion of the sealing ring is hollow.

Further features and advantages of the present invention will be apparent from the following description of a non-limitative embodiment thereof, with reference to the figures in the appended drawings, in which:
- figure 1 is a diagrammatic view of a gas turbine system comprising at least one butterfly valve according to the present invention;
- figure 2 is a perspective, exploded view with parts removed for clarity of a butterfly valve according to the present invention;
- figure 3 is a section view, with parts removed for clarity, of the butterfly valve in figure 2;
- figure 4 is a section view, with parts removed for clarity, of a first detail of the butterfly valve in figure 3;
- figure 5 is a section view, with parts removed for clarity, of a second detail of the butterfly valve in figure 3.

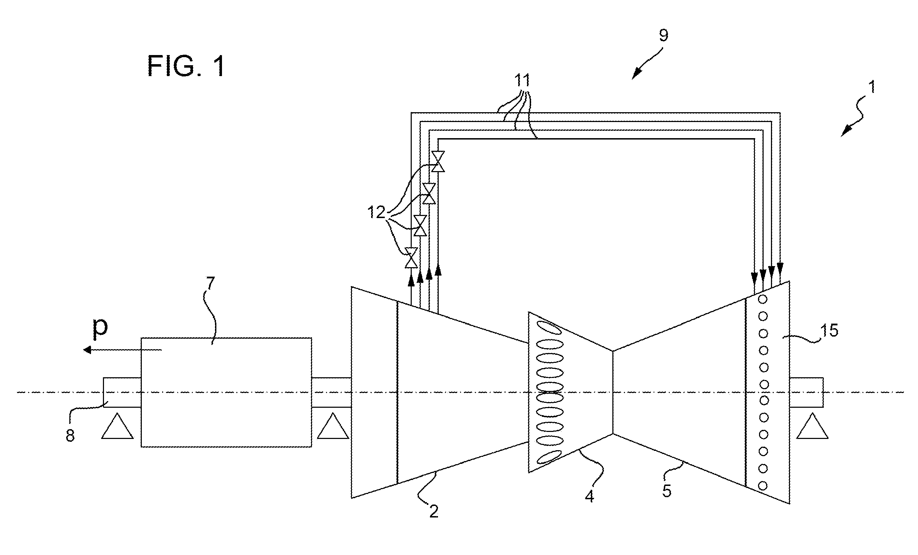

In figure 1, reference numeral 1 indicates as a whole a gas turbine plant for the production of electricity comprising a compressor 2, a combustion chamber 4, a gas turbine 5, which feeds a generator 7 mounted on the same shaft 8 of the gas turbine 5 and is adapted to deliver a power p, and a blow off circuit 9, which is provided with a plurality of extraction lines 11 and with a plurality of butterfly valves 12, each of which is arranged along a respective extraction line 11.

In the case in point of the non-limiting example described and illustrated here, there are four extraction lines 11 and four butterfly valves 12.

The extraction lines 11 put into communication a stage of the compressor 2, preferably one of the first stages, e.g. the fifth, with a discharge section 15 of the gas turbine 5.

The opening of one of the butterfly valves 12 under the bias of a respective hydraulic actuation device (not shown for the sake of simplicity in the appended figures) determines the discharge of a given air flow from the compressor 2 to the discharge section 15 of the gas turbine 5. The opening of one or more butterfly valves 12 is necessary in some steps of operating of the plant 1 to prevent the pumping of the compressor 2. In particular, the opening of the butterfly valves 12 is fundamental during the steps of starting up of the plant 1, because during these steps the pumping of the compressor 2 may cause considerable damage to the plant 1.

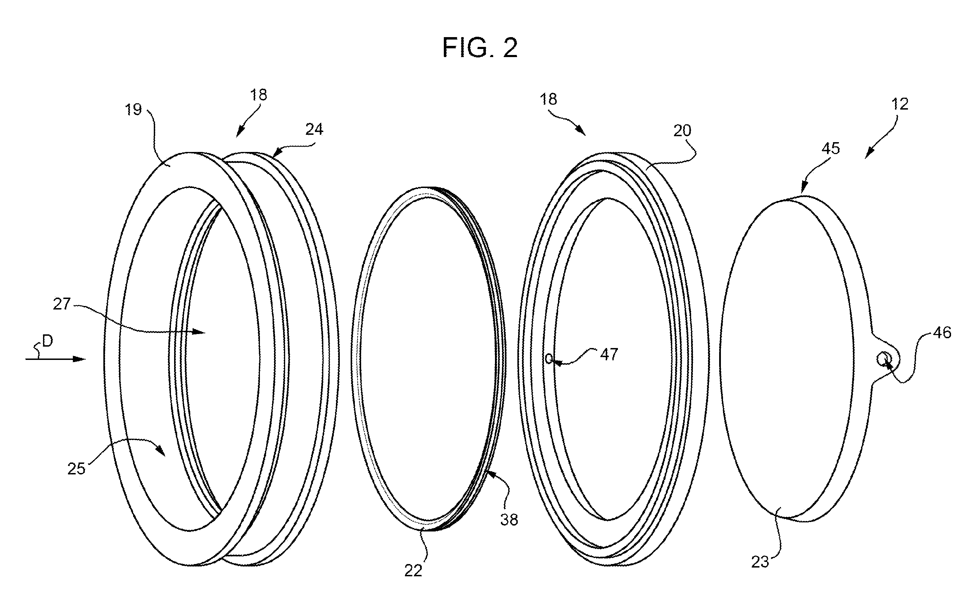

With reference to figure 2, each butterfly valve 12 comprises a supporting ring 18, defined by two coupled annular elements 19 and 20, a sealing ring 22 and a disc 23.

The supporting ring 18 has an outer perimeter edge 24 and an inner perimeter edge 25, which defines a fluid flow section 27. In the example considered here, the fluid is air from the compressor 2 flowing in a direction D (indicated in the appended figure by an arrow).

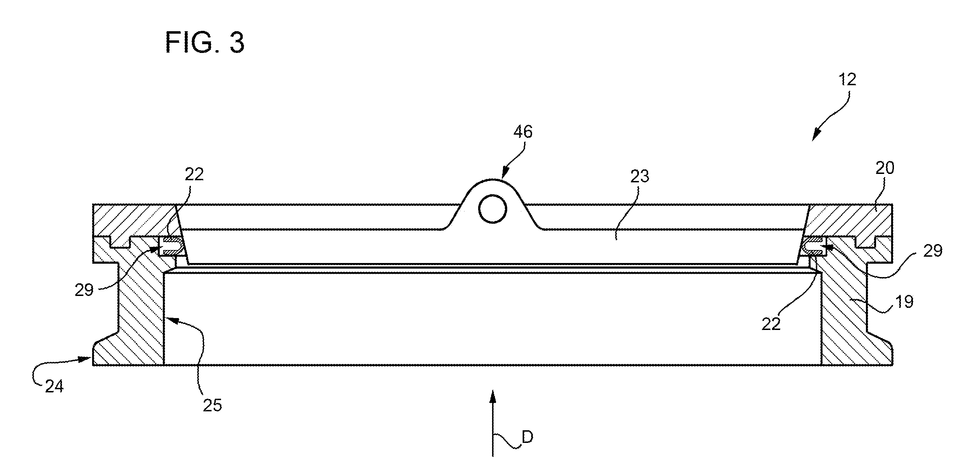

With reference to figure 3, the annular elements 19 and 20 are shaped and coupled to one another so as to create an annular seat 29 arranged along the inner perimeter edge 25 of the supporting ring 18 and adapted to be engaged by the sealing ring 22.

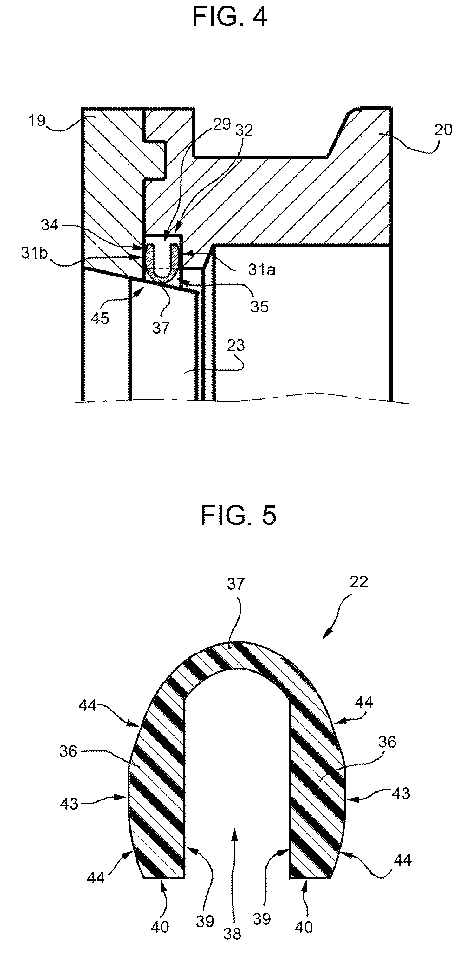

With reference to figure 4, the annular seat 29 is defined by a first and a second annular side face 31a and 31b, which extend in radial direction and are opposite to one another and an annular bottom surface 32. Preferably, but not necessarily, the radial length of the first annular side face 31a is shorter than the radial length of the second annular side face 31b.

The sealing ring 22 is partially housed in the annular seat 29 and comprises an inner annular portion 34, which is contained in the annular seat 29, and a projecting annular portion 35, which protrude in radial direction from the annular seat 29. In particular, hereinafter, projecting annular portion 35 means the portion of sealing ring 22 which projects with respect to the first side face 31a (as shown by the dashed line in figure 4).

With reference to figure 5, the sealing ring 22 has a cross section which is substantially "U" shaped so as to define an open annular cavity 38, which extends inside the inner annular portion 34 and the projecting annular portion 35.

The cross section of the sealing ring 22 comprises two parallel arms 36 and a curved portion 37.

Each arm 36 is defined by a flat inner face 39, by a flat base face 40 and by an outer face 41 comprising a flat central portion 43 parallel to the inner face 39 and two convex lateral portions 44.

The flat central portions 43 are arranged in use in contact with respective annular first and second annular side faces 31a and 31b of the annular seat 29. Preferably, the flat central portions 43 are parallel to the annular side faces 31a and 31b of the annular seat 29 so that, in use, there is a substantially uniform contact between the sealing ring 22 and the annular seat 29 to guarantee an optimal sealing and prevent the flow of fluid.

The convex lateral portions 44 avoid the present of sharp edges and thus avoid the sealing ring 22 from penetrating in the annular seat 29 in the contact points following the thermal distortions and the pushing actions which occur during use.

The curved portion 37 of the cross section of the sealing ring 22 is comprised in the projecting annular portion 35 and, in use, abuttingly cooperates against the disc 23 when, as will be described in greater detail below, the disc 23 is in the valve closing position.

In particular, the thickness of the curved portion 37 is such to confer a radial flexibility to the curved portion 37 sufficient to guarantee an optimal tightness between disc 23 and sealing ring 22.

Preferably, the curved portion 37 has a thickness lower than the greater thickness of the arms 36.

The annular cavity 38 confers elasticity and flexibility to the sealing ring 22, which can radially deform to guarantee the tightness and, at the same time, to avoid jamming between disc 23 and sealing ring 22.

Preferably, the material with which the sealing ring 22 is made is a material having the same thermal expansion coefficient as the disc 23. In this manner, the risk of jamming between disc 23 and sealing ring 22 is reduced in case of strong thermal stress.

With reference to figure 2, the disc 23 is hinged to the support ring 18, in particular to the annular element 20, and has a diameter substantially equal to the diameter of the inner perimeter edge 25 of the supporting ring 18.

In particular, the disc 23 has a perimeter edge 45 and is provided, along the perimeter edge 45, with two eyelets 46 arranged diametrically opposite and adapted to be engaged by a pin (not shown in the appended figures) fixed to two holes 47 (only one of which is visible in figure 2) of the annular element 20 of the supporting ring 18.

The disc 23 turns about the pin between a valve closing position (shown in figure 3), in which the disc 23 obstructs the flow section 27 and cooperates with the sealing ring 22 and a valve opening position, in which the disc 23 does not obstruct the flow section 27 allowing the flow of fluid. In particular, in the valve closing position, the perimeter edge 45 of the disc 23 is abuttingly arranged against the projecting portion 35 of the sealing ring 22.

It is finally apparent that changes and variations may be made to the butterfly valve 12 described herein without departing from the scope of protection of the appended claims.

## Claims

1. Butterfly valve (12), preferably for a blow off circuit (9) of a gas turbine plant (1), comprising:
- a supporting ring (18), which is provided with an inner perimeter edge (25) defining a fluid flow section (27), and with an annular seat (29) arranged along the inner perimeter edge (25);
- a disc (23), which is pivoted to the supporting ring (18) and is mobile between a valve closing position (12), wherein the disc (23) obstructs the fluid flow section (27), and a valve opening position (12), wherein the disc (23) does not obstruct the fluid passage section (27) allowing the flowing of the fluid;
- a sealing ring (22) partially housed in the annular seat (29) and adapted to abut against a peripheral edge (45) of the disc (23) when the disc (23) is in the valve closing position (12); the sealing ring (22) comprising an inner annular portion (34), which is contained in the annular seat (29), and a projecting annular portion (35), which projects radially from the annular seat (29);
the valve (12) being **characterized by** the fact that the projecting annular portion (35) of the sealing ring (22) is hollow.

2. Valve according to Claim 1, wherein the inner annular portion (34) is hollow.

3. Valve according to Claim 1 or 2, wherein the sealing ring (22) has a cross section which is substantially "U" shaped.

4. Valve according to Claim 3, wherein the cross section of the sealing ring (22) comprises two parallel arms (36) and a curved portion (37); each arm (36) comprising an outer face (41) provided with a flat central portion (43) and two convex lateral portions (44).

5. Valve according to Claim 4, wherein the flat central portions (43) are arranged, in use, in contact with respective annular lateral faces (31a, 31b) of the annular seat (29).

6. Valve according to Claim 5, wherein the flat central portions (43) are parallel to the annular lateral faces (31a, 31b) of the annular seat (29).

7. Valve according to anyone of the Claims from 4 to 6, wherein the curved portion (37) is comprised in the projecting annular portion (35) and, in use, abuts against the peripheral edge (45) of the disc (23) when the disc (23) is in the valve closing position.

8. Valve according to anyone of the Claims from 4 to 7, wherein the curved portion (37) has a thickness lower than the greater thickness of the arms (36).

9. Valve according to anyone of the foregoing Claims, wherein the sealing ring (22) and the disc (23) are made of materials having the same thermal expansion coefficient.
